# EUROPÄISCHE PATENTSCHRIFT

(11) **EP 0 932 093 B1**
(45) Veröffentlichungstag und Bekanntmachung des Hinweises auf die Patenterteilung: **16.06.2004**
(21) Anmeldenummer: 99100950.7
(22) Anmeldetag: 20.01.1999
(51) Int. Cl.: G05D 23/02, F03G 7/06

(54) **Thermisch steuerbare Anordnung**
Thermally controlled device
Dispositif à commande thermique

(30) Priorität: 21.01.1998 DE 19802117
(43) Veröffentlichungstag der Anmeldung: 28.07.1999
(73) Patentinhaber: FNE Forschungsinstitut für Nichteisen-Metalle Freiberg GmbH, 09599 Freiberg (DE)
(72) Erfinder: Pachschwöll, Heino, 34477 Twistetal (DE)
(74) Vertreter: Finsterwald, Manfred

(56) Entgegenhaltungen:
- WO-A-83/02363
- DE-A- 3 017 252
- US-A- 3 225 820
- US-A- 3 957 107
- US-A- 5 694 515

## Beschreibung

Die Erfindung betrifft eine thermisch steuerbare Anordnung.

Auf verschiedenen Gebieten der Technik treten bei thermischen Prozessen einerseits im eingelaufenen Zustand relativ hohe Temperaturen auf, die die eingesetzten Werkstoffe hochgradig belasten und eine permanente Kühlung erfordern, während andererseits für die effiziente Ingangsetzung des Prozesses die möglichst schnelle Erreichung der Prozeßtemperatur erwünscht ist.

So laufen viele chemische Reaktionen nur in einem bestimmten Temperaturbereich überhaupt oder mit vernünftiger Ausbeute ab, sind aber nach einer Startphase deutlich exotherm, so daß nach anfänglicher Energiezufuhr dann im eingefahrenen Zustand eine wirksame Ableitung der Prozeßwärme erforderlich ist.

Bei Verbrennungsmotoren, die bekanntlich im "warmen" Zustand eine ständige Kühlung benötigen, erfordern der Kaltstart und die Warmlaufphase über eine nicht unbeträchtliche Zeitspanne eine - unwirtschaftliche und ökologisch bedenkliche - Überfettung des Kraftstoff-Luft-Gemischs und strapazieren wegen der noch unzureichenden Schmierung stark die bewegten Teile.

Bei derartigen Prozessen stellt eine starke Wärmeableitung aus dem eigentlichen Prozeßraum bzw. eine hohe thermische Masse der Anordnung bei Einleitung des Prozesses einen erheblichen Nachteil dar, weil sie die An- bzw. Warmlaufphase verlängert. Während des regulären Betriebs ist dagegen eine hocheffiziente Wärmeabführung erwünscht. In dieser Phase ist schon aufgrund der benötigten Kühlmittelmenge und auch mit Blick auf die Regelcharakteristik des Kühlsystems eine nicht zu geringe thermische Masse wünschenswert.

Weiterhin sind bei Anordnungen, in denen Prozesse der oben genannten Art ablaufen, in der Regel steuer- bzw. regelbare Kühlanordnungen vorgesehen, bei denen zumeist Kühlgebläse oder Kühlmittelpumpen in Abhängigkeit von der Temperatur des Kühlmediums oder der Gehäusewandung der Anordnung o.ä. gesteuert werden. Die Steuereinrichtungen umfassen Meß-, Übertragungs- und Stellglieder und sind daher aufwendig, wartungsbedürftig und in gewissem Grade auch störanfällig.

Aus der US-A-3,225,820 sind thermisch steuerbare Anordnungen bekannt, bei denen ein Schaltelement jeweils mit einer Wärmesenke verbunden ist. Als Schaltelemente sind dabei Bimetallanordnungen oder mit einem sich thermisch ausdehnenden Medium gefüllte Balge vorgesehen. Eine ähnliche Vorrichtung, die einen solchen Balg verwendet, findet sich in der US-A-3,957,107.

Aus der WO 83/02363 A ist eine Vorrichtung zum Kühlen eines integrierten Schaltkreises bekannt, wobei auf einem als Wärmesenke dienenden Element eine Schicht mit niedrigem Schmelzpunkt aufgebracht ist, die auf dem integrierten Schaltkreis anliegt. Erwärmt sich der Schaltkreis über eine bestimme Temperatur, so schmilzt diese Schicht und erhöht dabei die Wärmeleitung zwischen Schaltkreis und Wärmesenke.

Der Erfindung liegt daher die Aufgabe zugrunde, eine einfache und zuverlässige thermisch steuerbare Anordnung anzugeben, die eine selbsttätige Veränderung der thermischen Masse bzw. Betätigung von Elementen einer Kühlvorrichtung bei geringen Reaktionszeiten ermöglicht.

Diese Aufgabe wird durch eine Anordnung mit den Merkmalen des Anspruchs 1 bzw. 2 gelöst.

Der Wärmeausdehnungskoeffizient des zweiten Materials ist dabei höher als der des ersten Materials oder die Phasenübergangstemperatur des zweiten Materials ist niedriger als die des ersten Materials.

Die Erfindung schließt den Gedanken ein, mit einer Kombination aus einem Wärmeaufnehmerelement und einem dieses berührenden, insbesondere mindestens teilweise darin eingebetteten, durch seine thermische Ausdehnung oder eine Phasenumwandlung wirkenden Schaltelement unmittelbar eine thermische bzw. mechanische Verbindung innerhalb der Anordnung herzustellen oder zumindest eine Kraftwirkung zu erreichen.

Das Wärmeaufnehmer- und das Schaltelement sind als unlösbarer Materialverbund ausgeführt.

Die Schaltwirkung wird erreicht durch die thermische Ausdehnung oder eine Gestaltänderung des Schaltelementes, durch die ein im kalten Zustand der Anordnung vorbestimmter Abstand überbrückt bzw. ein isolierendes und/oder keine Kraftwirkungen übertragendes Trennmedium verdrängt oder durchbrochen wird.

Durch das Schaltelement kann insbesondere bei Erreichen einer bestimmten Temperatur nach der Inbetriebnahme der Anordnung eine Verbindung zu einer größeren thermischen Masse und/oder zu einem Kühlsystem oder die Aktivierung eines Kühlsystems, speziell etwa die Erzeugung eines Kühlmittelstromes durch eine Pumpe oder ein Gebläse, bewirkt werden.

Das Schaltelement ist bevorzugt zu einer im wesentlichen formgetreu reversiblen thermischen Ausdehnung oder Phasenzustandsänderung ausgebildet, um für jeden Neustart und wiederholten Ablauf des Prozesses reproduzierbare Verhältnisse zu haben. Bei Wahl eines Phasenübergangs-Schaltelementes wird zur Ausbalancierung kleinerer Temperaturschwankungen unter Vermeidung ständiger Phasenumwandlungen vielfach die Wahl eines Materials mit einer vorbestimmten Hysteresecharakteristik des Phasenübergangs zweckmäßig sein.

Für spezielle Anwendungsfälle, wo eine reproduzierbare Prozeßführung nicht wesentlich ist oder grundsätzlich nicht in Betracht kommt - insbesondere für Notabschaltsysteme - , ist jedoch ein sich irreversibel veränderndes Schaltelement mit Vorteil einsetzbar.

Der Phasenübergang des Schaltelementes - das in dieser Ausbildung auch als Schaltmedium bezeichnet werden könnte - ist bevorzugt eine Verflüssigung oder Erweichung aus einem festen (oder graduell festeren) Zustand heraus. Die Anordnung und Handhabung des Schaltmediums in der Anordnung erfordern in diesem Fall besondere konstruktive Aufmerksamkeit, um eine möglichst in allen Phasen reproduzierbare Führung des thermischen Prozesses zu erreichen. So kann es zweckmäßig sein, das Schaltmedium bei Abschaltung der Anordnung, d.h. im noch warmen Zustand, in einen Vorratsraum zurückzuführen, wo es erstarrt und aus dem heraus es sich bei erneuter Inbetriebnahme der Anordnung in einen Betriebsraum hinein erweicht bzw. verflüssigt.

In der praktischen Ausführung wird das Schaltelement bzw. -medium mindestens partiell in eine Ausnehmung des Wärmeaufnehmerelementes oder eines umgebenden Gehäuses eingebettet sein, die seiner Ausdehnung oder Gestaltänderung eine gewisse Richtungsbestimmung gibt.

Das Schaltelement kann eine Mehrzahl (bis hin zu einer großen Vielzahl) von Entitäten umfassen, die insbesondere in Hohlräume des Wärmaufnehmerelementes eingebettet sind. Als entsprechendes Verbundsystem dient in einer zweckmäßigen Ausführung ein Schicht- oder Kammerverbund, bei dem Streifen, Rasterpunkte oder -felder in einer dem speziellen Anwendungszweck angepaßten Formgebung aus einem Material mit deutlich abweichendem Ausdehnungskoeffizienten und/oder Phasenübergangsverhalten ausgebildet sind.

Zur großtechnischen Realisierung der Erfindung in Systemen mit nicht zu hoher Arbeitstemperatur sind Träger bzw. Matrizen aus modernen, thermisch belastbaren Polymerverbunden kostengünstig und vorteilhaft einsetzbar; für Anwendungen im Bereich höherer Temperaturen eignen sich eher Sinterwerkstoffe auf Metall-, Legierungs-, Oxid-, Carbid oder ähnlicher Basis.

Für Anwendungsfälle, bei denen es auf hohe Wärmeleitfähigkeit und/oder elektrische Leitfähigkeit ankommt, ist für das Schaltelement der Einsatz einen metallischen Werkstoffs, insbesondere mit großem Ausdehnungskoeffizienten bzw. nicht zu hoher Schmelztemperatur und hoher Wärmeleitfähigkeit (etwa Natrium), zweckmäßig.

Hierbei kann auch das Wärmeaufnehmerelement aus einem - hinsichtlich der Bedingungen im Prozeßraum optimierten, beispielsweise hoch abriebfesten und/oder gegenüber chemisch aggressiven Umgebung hochbeständigen - metallischen Werkstoff bestehen oder einen keramischen Werkstoff aufweisen. Eine hohe Wärmeleitfähigkeit ist hierfür weniger wichtig, denn die Aufgabe der Wärmeableitung wird primär von anderen Komponenten übernommen.

Primär dient hierzu ein Wärmeableitungselement, welches derart zu dem Schaltelement angeordnet ist, daß es in Abhängigkeit vom Steuerzustand der Wärmequelle durch die Wirkung der thermischen Ausdehnung oder Phasenzustandsänderung des Schaltelementes von dem Wärmeaufnehmerelement thermisch isoliert ist oder dieses thermisch kontaktiert.

Bei einer Verbrennungsanlage oder -maschine ist das Wärmeaufnehmerelement insbesondere die Innenwandung des Verbrennungs- oder eines Abgasraumes (bzw. ein Abschnitt derselben) oder ein direkt dem Verbrennungs- oder Abgasraum benachbarter Abschnitt eines Bauteils (z.B. ein Ventilboden oder -mantel, eine Brennerdüse, ein Kolbenboden etc. bzw. eine Beschichtung dieser Bauteile), und das Wärmeableitungselement ist ein nicht direkt dem Verbrennungs- oder Abgasraum benachbarter Abschnitt der Wandung oder des Bauteils (insbesondere ein dort eingebettetes Kühlsystem).

Analog ist die Funktionsaufteilung bei einer thermisch belasteten Industrieanlage, etwa einem chemischen oder metallurgischen Reaktor.

In einem ersten Betriebszustand der Verbrennungsanlage oder -maschine oder Industrieanlage besteht im einfachsten Falle ein Abstand zwischen dem Schaltelement und dem Wärmeableitungselement, der in einem zweiten Betriebszustand infolge der thermischen Ausdehnung oder Phasenzustandsänderung des Schaltelementes überbrückt bzw. geschlossen ist, so daß in diesem zweiten - und nur in diesem - Betriebszustand eine wirkungsvolle Wärmeabfuhr erfolgt.

In einer bevorzugten Ausführung zur Erzielung einer mechanischen Schaltwirkung umfaßt die thermisch steuerbare Anordnung ein erstes und ein zweites Kraft- oder Formschlußglied, welche derart ausgebildet sind, daß sie in Abhängigkeit vom Steuerzustand der Wärmequelle durch die Wirkung der thermischen Ausdehnung oder Phasenzustandsänderung des Schaltelementes von einem eingriffslosen Zustand in einen Eingriffszustand gebracht werden.

Eine solche Ausführung ist etwa eine über die Wärmeaufnahme von einem bedarfsweise zu kühlenden Bauteil bzw. aus einem zu kühlenden Prozeßraum thermisch gesteuerte Kupplung für eine Kühlmittelpumpe oder ein Kühlluftgebläse.

In einer zweiten aus mechanischer Sicht wichtigen Ausführung umfaßt die Anordnung ein Hüllglied, welches derart ausgebildet und zum Schaltelement angeordnet ist, daß sich durch die Wirkung der thermischen Ausdehnung oder Phasenzustandsänderung des Schaltelementes die Querschnittsfläche eines durch das Hüllglied und das Schaltelement (oder das Hüllglied unter Wirkung des Schaltelementes) bestimmten Kanals oder einer Öffnung oder das Volumen eines durch das Hüllglied und das Schaltelement bestimmten Raumbereiches ändert.

In dieser Ausführung sind etwa ein thermisch angesteuerter Durchflußregler, ein Ventil oder eine Dosierpumpe mit einfachem Aufbau und zuverlässiger Funktion realisierbar.

In den letztgenannten Ausführungen sind in vorteilhaft einfacher Ausbildung eines der Kraft- bzw. Formschlußglieder oder das Hüllglied direkt durch das Wärmeaufnehmerelement gebildet; es ist aber auch der fallspezifische Anbau eines mechanischen Wirkelementes an eine weitgehend standardisierte Basis-Steueranordnung möglich.

Schließlich läßt sich die erfindungsgemäße Anordnung auch für elektrische Schaltvorgänge einsetzen. Sie umfaßt hierzu einen ersten und einen zweiten elektrischen Schaltkreisabschnitt, welche derart ausgebildet sind, daß sie durch die Wirkung der Phasenzustandsänderung des Schaltelementes von einem elektrisch getrennten Zustand in den Zustand eines geschlossenen Stromkreises gebracht werden.

Hierbei kann in einer Ausführung mit besonders einfachem Aufbau der erste Schaltkreisabschnitt das Wärmeaufnehmerelement direkt einschließen, das in diesem Falle natürlich elektrisch leitfähig ausgebildet ist. Alternativ hierzu kann ein nichtleitendes Schaltelement einen separaten Kontakt bewegen, mit dem der elektrische Schaltvorgang ausgeführt wird.

Durch die Anordnung der unterschiedlichen Materialien in verschiedenen Sektoren kann das gewünschte Schaltverhalten der Anordnung gezielt beeinflußt werden. Auch ist durch Verwendung verschiedener Materialien die Erzeugung eines gradierten Zustandes möglich.

Vorteilhafte Weiterbildungen der Erfindung ergeben sich im übrigen aus der nachfolgenden Beschreibung von Ausführungsbeispielen anhand der Figuren. Von den Figuren zeigen:
Figur 1a eine schematische Querschnittsdarstellung eines Abschnitts einer Kolben-Zylinder-Einheit eines Verbrennungsmotors,
Figur 1b eine Detaildarstellung der Zylinderwand zu Fig. 1a in zwei verschiedenen Betriebszuständen des Motors,
die Figuren 2a und 2b schematische Querschnittsdarstellungen einer thermisch steuerbaren Anordnung, bei der ein flüssiges Wärmekontaktmedium eingesetzt wird, und
die Figuren 3a und 3b schematische Querschnittsdarstellungen einer thermisch steuerbaren Kupplungsanordnung.

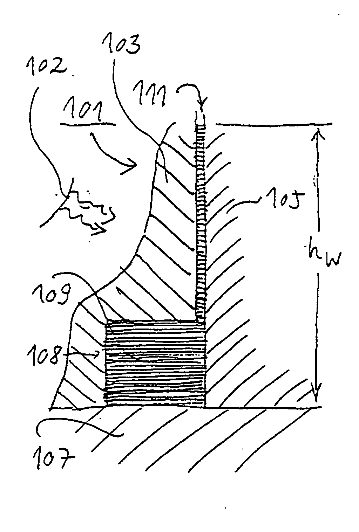

In Fig. 1a und 1b ist schematisch im Querschnitt ein Abschnitt einer Kolben-Zylinder-Einheit 1 eines Verbrennungsmotors mit einem Kolben 3 mit einem Kolbenring 5 und einer mehrschichtigen Zylinderwand 7 gezeigt.

Die Zylinderwand umfaßt eine dünne Innenwandung bzw. Lauffläche 9 aus einem hoch verschleißfesten Keramikmaterial, deren Außenfläche in axialer Reihung ringförmige Ausnehmungen 11 zur Aufnahme von hoch wärmeleitfähigen Wärmekontaktringen 13 aus einem Material mit hohem Wärmeausdehnungskoeffizienten aufweist. Mit einem Ringspalt 15 ist die Innenwandung 9 von einer wesentlich dickeren Leichtmetall-Außenwandung 17 als Teil eines Motorblocks umgeben, in die Kühlkanäle 19 zur Führung von Kühlflüssigkeit 21 eingearbeitet sind.

Fig. 1b zeigt am Ausschnitt A aus Fig. 1 zum einen (in der oberen Darstellung), daß die Wärmekontaktringe 13 im kalten Zustand des Motors einen Abstand von der Außenwandung 17 haben, wodurch insgesamt die Innenwandung 9 von der Außenwandung 17 weitgehend thermisch entkoppelt ist. In der Start- und Warmlaufphase des Motors bleiben daher die große thermische Masse und wärmeabführende Wirkung der Außenwandung 17 sowie die Kühlflüssigkeit 21 in den Kühlkanälen thermisch ohne Einfluß, so daß sich die Innenwandung 9 und der Kolben 3 schnell auf Betriebstemperatur erwärmen können.

In der unteren Darstellung in Fig. 1b ist zu erkennen, daß sich - im warmen Zustand des Motors - die Wärmekontaktringe 13 infolge ihrer starken thermischen Ausdehnung radial bis zur gegenseitigen Berührung an die Außenwandung 17 angenähert haben und einen guten thermischen Kontakt zwischen dieser und der Innenwandung 9 vermitteln. Hierdurch werden die große thermische Masse des Motorblocks und die Kühlwirkung der Kühlflüssigkeit 21 in vollem Maße wirksam und die Lauffläche 9 sowie der Kolben 3 auf der optimalen Betriebstemperatur gehalten.

Wird der Motor abgestellt, überwiegt die Wärmeableitung die Wärmezufuhr, die Wärmekontaktringe kühlen sich ab und ziehen sich zusammen und nehmen schließlich reversibel wieder die in der oberen Ausschnittdarstellung gezeigte Lage mit Abstand zur Außenwandung ein.

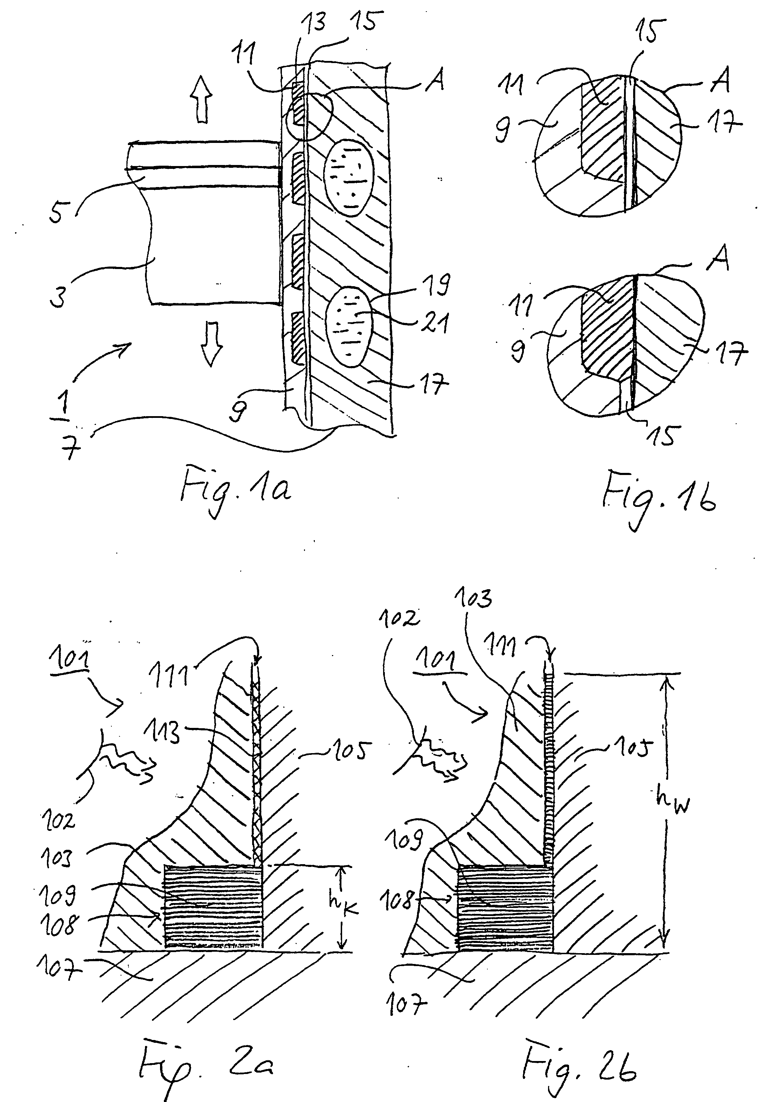

In Fig. 2a und 2b ist in schematischer Querschnittsdarstellung eine thermisch steuerbare Anordnung 101 gezeigt. bei der zwischen einem durch eine Wärmequelle 102 thermisch belasteten Teil bzw. Wärmeaufnehmerelement 103 und einem Kühlkörper (Wärmeableitungselement) 105 auf einer wärmeisolierenden Basis 107 in einem Vorratsraum 108 ein flüssiges Wärmekontaktmedium 109 mit hohem thermischen Ausdehnungskoeffizienten und hoher Wärmeleitfähigkeit vorgesehen ist. Oberhalb des Vorratsraumes 108 befindet sich zwischen dem Wärmeaufnehmerelement 103 und dem Wärmeableitungselement 105 ein Spalt 111.

Es ist zu erkennen, daß im (in Fig. 2a skizzierten) kalten Zustand der Anordnung 101 zwischen dem Wärmeaufnehmer- und dem Wärmeableitungselement eine thermische Kontaktfläche mit einer Höhe hK vorhanden ist, während der thermische Kontakt ansonsten durch ein wärmeisolierendes Trennfluid 113 unterbrochen ist, das sich in dem Spalt 111 über dem Flüssigkeitsspiegel des Wärmekontaktmediums 109 befindet.

In dem in Fig. 2b skizzierten warmen Zustand der Anordnung 101 hingegen hat sich das Wärmekontaktmedium in den vorher mit dem Trennfluid 113 gefüllten Spalt 111 hinein ausgedehnt und das Trennfluid 113 hieraus bis zur Höhe hW verdrängt. Für eine hochwirksame Wärmeübertragung steht nunmehr eine wesentlich größere Kontaktfläche zu Verfügung.

Anhand von Fig. 2a und 2b kann man sich leicht die selbstregelnden Eigenschaften der Anordnung veranschaulichen: Geht man von einer im Hinblick auf die zu handhabenden Temperaturdifferenzen und den Ausdehnungskoeffizienten des Wärmekontaktmediums angemessenen Dimensionierung des Vorratsbehälters 108 und des Spaltes 111 aus, so wird sich die Höhe hW des Wärmekontaktmediums im Spalt 111 und damit die effektive Wärmeübertragungsfläche in Abhängigkeit von der aktuellen Temperatur so einstellen, daß Wärmezufuhr und Wärmeableitung sich die Waage halten, also ein thermisches Gleichgewicht besteht.

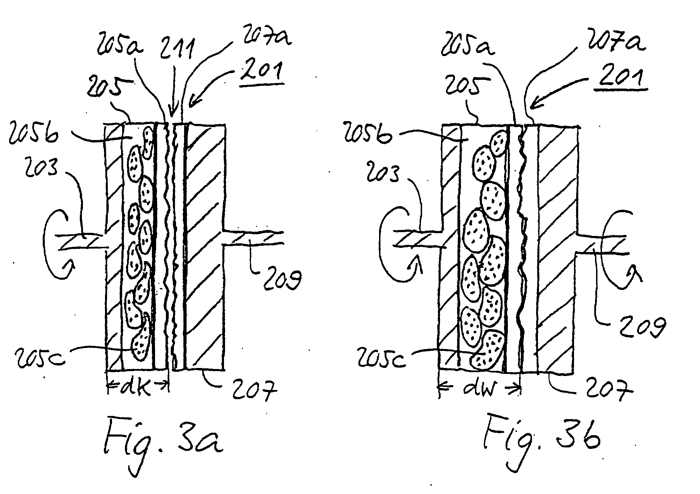

Fig. 3a und 3b sind schematische Querschnittsdarstellungen einer thermisch steuerbaren Kupplungsanordnung 201 mit einer Antriebswelle 203, einer ersten Kupplungsscheibe 205, einer zweiten Kupplungsscheibe 207 und einer Abtriebswelle 209. Beide Kupplungsscheiben tragen auf den einander zugewandten Stirnflächen einen Reibbelag 205a bzw. 207a, und die seitens der Antriebsquelle mit Wärmeenergie beaufschlagte antriebsseitige Kupplungsscheibe 205 weist zudem eine Steuerschicht 205b auf, deren Dicke sich temperaturabhängig ändert.

Wie in Fig. 3a gezeigt, ist die Dicke dK im kalten Zustand der (nicht dargestellten) Antriebsquelle geringer, so daß zwischen den beiden Kupplungsscheiben 205, 207 ein Abstand 211 besteht, während (wie Fig. 3b zeigt) sich die Dicke im antriebsseitig warmen Zustand durch die Volumenzunahme eines in Kavitäten der Steuerschicht 205b eingelagerten Ausdehnungsmediums 205c auf den Wert dW so weit vergrößert hat, daß die Scheiben 205, 207 im Reibschluß miteinander stehen und die Drehung der Antriebswelle 203 auf die Abtriebswelle 209 übertragen wird.

Eine Anordnung ähnlich der in Fig. 3a und 3b skizzierten Art ist auch mit Formschlußelementen anstelle der Reibbeläge ausführbar und kann etwa als selbstregelnde thermische Kupplung für ein Motor-Kühlluftgebläse o.ä. eingesetzt werden.

Die Ausführung der Erfindung beschränkt sich in keiner Weise auf die oben skizzierten Beispiele, sondern es sind im Rahmen der Ansprüche eine Vielzahl anderer Ausführungsformen und Anwendungsfälle möglich.

## Patentansprüche

1. Thermisch steuerbare Anordnung (1; 101; 201) zum Einsatz an einer steuerbaren Wärmequelle (102), mit
- einem wärmeleitfähigen Wärmeaufnehmerelement (9; 103; 205), welches aus einem ersten Material mit einem ersten thermischen Ausdehnungskoeffizienten besteht und in thermischem Kontakt mit der Wärmequelle steht, und
- einem mit dem Wärmeaufnehmerelement in thermischem Kontakt stehenden Schaltelement (13; 109; 205b) aus einem zweiten Material mit einem zweiten, gegenüber dem ersten Material höheren thermischen Ausdehnungskoeffizienten, welches in Abhängigkeit vom Steuerzustand der Wärmequelle durch die Wirkung seiner thermischen Ausdehnung eine mechanische Verbindung bzw. einen Kraftfluß und/oder einen thermischen Kontakt mit einem Wärmeableitungselement herstellt oder unterbricht,
wobei das Wärmeaufnehmerelement (9; 103; 205) und das Schaltelement (13, 109; 205b) einen unlösbaren Materialverbund bilden.

2. Thermisch steuerbare Anordnung zum Einsatz an einer steuerbaren Wärmequelle, mit
- einem wärmeleitfähigen Wärmeaufnehmerelement, welches aus einem ersten Material mit einer ersten Phasenübergangstemperatur besteht und in thermischem Kontakt mit der Wärmequelle steht, und
- einem mit dem Wärmeaufnehmerelement in thermischem Kontakt stehenden Schaltelement aus einem zweiten Material mit einer zweiten, gegenüber dem ersten Material niedrigeren Phasenübergangstemperatur, welches in Abhängigkeit vom Steuerzustand der Wärmequelle durch die Wirkung einer Phasenzustandsänderung eine mechanische Verbindung bzw. einen Kraftfluß und/oder einen thermischen und/oder elektrischen Kontakt mit einem Wärmeableitungselement herstellt oder unterbricht,
wobei das Wärmeaufnehmerelement und das Schaltelement einen unlösbaren Materialverbund bilden.

3. Thermisch steuerbare Anordnung nach Anspruch 2,
**dadurch gekennzeichnet, daß**
das Schaltelement aus einem Material mit Hysteresecharakteristik des Phasenübergangs besteht, und/oder daß
der Phasenübergang des Schaltelementes eine Verflüssigung oder Erweichung aus einem festen Zustand ist.

4. Thermisch steuerbare Anordnung nach einem der vorangehenden Ansprüche,
**dadurch gekennzeichnet, daß**
das Schaltelement (13; 109; 205b) zu einer im wesentlichen formgetreu reversiblen thermischen Ausdehnung oder Phasenzustandsänderung ausgebildet ist, und/oder daß
das Schaltelement (13; 109) mindestens partiell in eine Ausnehmung (11; 108) des Wärmeaufnehmerelementes (9) oder eines umgebenden Gehäuses (103, 105, 107) eingebettet ist oder das Schaltelement (205b) eine Mehrzahl von Entitäten umfaßt, die insbesondere in Hohlräume des Wärmaufnehmerelementes eingebettet sind.

5. Thermisch steuerbare Anordnung nach einem der vorangehenden Ansprüche,
**dadurch gekennzeichnet, daß**
an mindestens einen Abschnitt des Schaltelementes (13; 109; 205b) direkt oder indirekt ein freier Raumbereich (15; 211) oder ein isolierendes Medium (113) angrenzt, und/oder daß
das Schaltelement (13) einen metallischen Werkstoff aufweist, und/oder daß
das Wärmeaufnehmerelement (9) einen keramischen oder metallischen Werkstoff aufweist.

6. Thermisch steuerbare Anordnung nach einem der vorangehenden Ansprüche,
**gekennzeichnet durch**
ein Wärmeableitungselement (17 bis 21; 105), welches derart zu dem Schaltelement (13; 109) angeordnet ist, daß es in Abhängigkeit vom Steuerzustand der Wärmequelle (102) **durch** die Wirkung der thermischen Ausdehnung oder Phasenzustandsänderung des Schaltelementes von dem Wärmeaufnehmerelement thermisch isoliert ist oder dieses thermisch kontaktiert.

7. Thermisch steuerbare Anordnung nach Anspruch 6,
**dadurch gekennzeichnet, daß**
das Wärmeaufnehmerelement als Abschnitt der Innenwandung (9) des Verbrennungs- oder eines Abgasraumes oder als direkt dem Verbrennungs- oder Abgasraum benachbarter Abschnitt eines Bauteils einer Verbrennungsanlage oder -maschine (1) und das Wärmeableitungselement als nicht direkt dem Verbrennungs- oder Abgasraum benachbarter Abschnitt der Wandung (17) oder des Bauteils ausgebildet sind, und daß
in einem ersten Betriebszustand der Verbrennungsanlage oder - maschine (1) oder Industrieanlage ein Abstand (15) zwischen dem Schaltelement (13) und dem Wärmeableitungselement (17 bis 21) besteht, der in einem zweiten Betriebszustand infolge der thermischen Ausdehnung oder Phasenzustandsänderung des Schaltelementes geschlossen ist.

8. Thermisch steuerbare Anordnung nach Anspruch 6,
**dadurch gekennzeichnet, daß**
das Wärmeaufnehmerelement als Abschnitt der Innenwandung eines Prozeß- oder Prozeßnebenraumes oder als direkt dem Prozeßoder Prozeßnebenraum benachbarter Abschnitt eines Bauteils einer Industrieanlage und das Wärmeableitungselement als nicht direkt dem Prozeß- oder Prozeßnebenraum benachbarter Abschnitt der Wandung oder des Bauteils ausgebildet sind.

9. Thermisch steuerbare Anordnung nach einem der vorangehenden Ansprüche,
**gekennzeichnet durch**
ein erstes und ein zweites Kraft- oder Formschlußglied (205, 207), welche derart ausgebildet sind, daß sie in Abhängigkeit vom Steuerzustand der Wärmequelle **durch** die Wirkung der thermischen Ausdehnung oder Phasenzustandsänderung des Schaltelementes von einem eingriffslosen Zustand in einen Eingriffszustand gebracht werden, und/oder **durch**
ein Hüllglied, welches derart ausgebildet und zum Schaltelement angeordnet ist, daß sich in Abhängigkeit vom Steuerzustand der Wärmequelle **durch** die Wirkung der thermischen Ausdehnung oder Phasenzustandsänderung des Schaltelementes die Querschnittsfläche eines **durch** das Hüllglied und das Schaltelement bestimmten Kanals oder einer Öffnung oder das Volumen eines **durch** das Hüllglied und das Schaltelement bestimmten Raumbereiches ändert, wobei das erste Formschlußglied bzw. das Hüllglied vorzugsweise **durch** das Wärmeaufnehmerelement gebildet ist.

10. Thermisch steuerbare Anordnung nach einem der Ansprüche 2 bis 5,
**gekennzeichnet durch**
einen ersten und einen zweiten elektrischen Schaltkreisabschnitt, welche derart ausgebildet sind, daß sie in Abhängigkeit vom Steuerzustand der Wärmequelle **durch** die Wirkung der Phasenzustandsänderung des Schaltelementes von einem elektrisch getrennten Zustand in den Zustand eines geschlossenen Stromkreises gebracht werden,
wobei es bevorzugt ist, wenn der erste Schaltkreisabschnitt das Wärmeaufnehmerelement einschließt und dieses elektrisch leitfähig ausgebildet ist.

11. Thermisch steuerbare Anordnung nach einem der. vorangehenden Ansprüche,
**dadurch gekennzeichnet, daß**
unterschiedliche Materialien in verschiedenen Sektoren angeordnet sind, und/oder daß
durch Verwendung unterschiedlicher Materialien ein gradierter Zustand geschaffen ist.

## Claims

1. A thermally controllable arrangement (1; 101; 210) for use at a controllable heat source (102) comprising
- a thermally conductive heat absorber element (9; 103; 205) consisting of a first material with a first thermal coefficient of expansion and standing in thermal contact with the heat source; and
- a switch element (13; 109; 205b) which stands in thermal contact with the heat absorber element, is made from a second material with a second thermal coefficient of expansion which is higher with respect to the first material and establishes or interrupts a mechanical connection or a force flow and/or a thermal contact with a heat dissipation element in dependence on the control state of the heat source by the effect of its thermal expansion,
wherein the heat absorber element (9; 103; 205) and the switch element (13, 109; 205b) form an inseparable material composite.

2. A thermally controllable arrangement for use at a controllable heat source comprising
- a thermally conductive heat absorber element consisting of a first material with a first phase transition temperature and standing in thermal contact with the heat source; and
- a switch element which stands in thermal contact with the heat absorber material, is made from a second material with a second phase transition temperature which is lower with respect to the first material and establishes or interrupts a mechanical connection or a force flow and/or a thermal contact and/or an electrical contact with a heat dissipation element in dependence on the control state of the heat source by the effect of its change of phase state,
wherein the heat absorber element and the switch element form an inseparable material composite.

3. A thermally controllable arrangement in accordance with claim 2, **characterised**
**in that** the switch element consists of a material with a hysteresis characteristic of the phase transition; and/or
**in that** the phase transition of the switch element is a liquefaction or softening from a solid state.

4. A thermally controllable arrangement in accordance with any one of the preceding claims, **characterised**
**in that** the switch element (13; 109; 205b) is made for a substantially exactly reversible thermal expansion or change of phase state; and/or
**in that** the switch element (13; 109) is embedded at least partially into a recess (11; 108) of the heat absorber element (9) or of a surrounding housing (103, 105, 107) or in that the switch element (205b) includes a plurality of entities which are in particular embedded into hollow spaces of the heat absorber element.

5. A thermally controllable arrangement in accordance with any one of the preceding claims, **characterised**
**in that** a free spatial region (15; 211) or an insulating medium (113) is directly or indirectly adjacent to at least one section of the switch element (13; 109; 205b); and/ or
**in that** the switch element (13) has a metallic material; and/or
**in that** the heat absorber element (9) has a ceramic or a metallic material.

6. A thermally controllable arrangement in accordance with any one of the preceding claims, **characterised by** a heat dissipation element (17 to 21; 105) arranged with respect to the switch element (13; 109) such that it is thermally insulated from the heat absorber element or contacts it thermally in dependence on the control state of the heat source (102) by the effect of the thermal expansion or of the change of phase state of the switch element.

7. A thermally controllable arrangement in accordance with claim 6, **characterised**
**in that** the heat absorber element is made as a section of the inner wall (9) of the combustion space or of an exhaust gas space or as a section of a component of a combustion plant or of a combustion engine (1) directly adjacent to the combustion space or to the exhaust gas space and in that the heat dissipation element is made as a section of the wall (17) or of the component not directly adjacent to the combustion space or to the exhaust gas space; and
**in that** there is a spacing (15) between the switch element (13) and the heat dissipation element (17 to 21) in a first operating state of the combustion plant or of the combustion engine (1) or of an industrial plant which is closed in a second operation state due to the thermal expansion or to the change of phase state of the switch element.

8. A thermally controllable arrangement in accordance with claim 6, **characterised in that** the heat absorber element is made as a section of the inner wall of a process space or of a secondary process space or as a section of a component of an industrial plant directly adjacent to the process space or to the secondary process space and the heat dissipation element is made as a section of the wall or of the component not directly adjacent to the process space or to the secondary process space.

9. A thermally controllable arrangement in accordance with any one of the preceding claims, **characterised**
**by** a first and a second force-transmitting or shape-matched member (205, 207) made such that they are brought from a non-engaging state into an engaging state in dependence on the control state of the heat source by the effect of the thermal expansion or of the change of phase state of the switch element; and / or
by an envelope member made and arranged with respect to the switch element such that the cross-sectional area of a passage defined by the envelope member and by the switch element or of an opening or the volume of a spatial region defined by the envelope member and by the switch element changes in dependence on the control state of the heat source by the effect of the thermal expansion or of the change of phase state, with the first shape-matched member or the envelope member preferably being formed by the heat absorber element.

10. A thermally controllable arrangement in accordance with one of claims 2 to 5, **characterised by** a first electrical circuit section and by a second electrical circuit section which are made such that they are brought from an electrically separated state into the state of a closed electric circuit in dependence on the control state of the heat source by the effect of the change of phase state of the switch element, with it being preferred for the first circuit section to include the heat absorber element and for the latter to be made electrically conductive.

11. A thermally controllable arrangement in accordance with any one of the preceding claims, **characterised**
**in that** different materials are arranged in different sectors; and/or
**in that** a graded state is created by using different materials.

## Revendications

1. Dispositif à commande thermique (1 ; 101 ; 201) pour l'utilisation sur une source de chaleur (102) pouvant être commandée, comprenant :
- un élément récepteur de chaleur thermoconducteur (9 ; 103 ; 205), qui se compose d'un premier matériau avec un premier coefficient de dilatation thermique et qui est en contact thermique avec la source de chaleur ; et
- un élément de commutation (13 ; 109; 205b) qui est en contact thermique avec l'élément récepteur de chaleur et qui se compose d'un second matériau avec un second coefficient de dilatation thermique plus élevé en comparaison à celui du premier matériau, lequel interrompt ou établit une liaison mécanique ou une transmission de forces et/ou un contact thermique avec un élément de dissipation thermique, en dépendance de l'état de commande de la source de chaleur, via l'effet de sa dilatation thermique ;
dans lequel l'élément récepteur de chaleur (9 ; 103 ; 205) et l'élément de commutation (13 ; 109 ; 205b) forment un matériau composite non détachable.

2. Dispositif à commande thermique pour l'utilisation sur une source de chaleur pouvant être commandée, comprenant :
- un élément récepteur de chaleur thermoconducteur, qui se compose d'un premier matériau avec une première température de transition de phase et qui est en contact thermique avec la source de chaleur ; et
- un élément de commutation qui est en contact thermique avec l'élément récepteur de chaleur et qui se compose d'un second matériau avec une seconde température de transition de phase plus basse en comparaison à celle du premier matériau, lequel interrompt ou établit une liaison mécanique ou une transmission des forces et/ou un contact thermique et/ou électrique avec un élément de dissipation thermique, en dépendance de l'état de commande de la source de chaleur via l'effet d'une modification de l'état de phase,
dans lequel l'élément récepteur de chaleur et l'élément de commutation forment un matériau composite non détachable.

3. Dispositif à commande thermique selon la revendication 2, **caractérisé en ce que** :
- l'élément de commutation se compose d'un matériau avec une caractéristique d'hystérésis de la transition de phase ; et/ou
- la transition de phase de l'élément de commutation est une liquéfaction ou un amollissement depuis un état solide.

4. Dispositif à commande thermique selon l'une des revendications précédentes, **caractérisé en ce que** :
- l'élément de commutation (13 ; 109 ; 205b) est réalisé de manière à présenter une modification de l'état de phase ou une dilatation thermique réversible, essentiellement avec conservation de la forme ; et/ou
- l'élément de commutation (13 ; 109) est noyé au moins partiellement dans une cavité (11 ; 108) de l'élément récepteur de chaleur (9) ou d'un boîtier qui l'entoure (103 ; 105 ; 107) ; ou
- l'élément de commutation (205b) comprend une pluralité d'entités qui sont noyées en particulier dans les cavités de l'élément récepteur de chaleur.

5. Dispositif à commande thermique selon l'une des revendications précédentes, **caractérisé en ce que** :
- une zone d'espace libre (15 ; 211) ou une matière isolante (113) est directement ou indirectement adjacente à au moins un tronçon de l'élément de commutation (13 ; 109 ; 205b) ; et/ou
- l'élément de commutation (13) comporte un matériau métallique ; et/ou
- l'élément récepteur de chaleur (9) comporte un matériau céramique ou métallique.

6. Dispositif à commande thermique selon l'une des revendications précédentes, **caractérisé par** un élément de dissipation thermique (17 à 21 ; 105), lequel est agencé par rapport à l'élément de commutation (13 ; 109) de manière à être isolé thermiquement de l'élément récepteur de chaleur, ou à venir en contact thermique avec celui-ci, via l'effet de la dilatation thermique ou de la modification de l'état de phase de l'élément de commutation, en dépendance de l'état de commande de la source de chaleur (102).

7. Dispositif à commande thermique selon la revendication 6, **caractérisé en ce que** :
- l'élément récepteur de chaleur est réalisé comme tronçon de la paroi intérieure (9) du compartiment de combustion ou d'un compartiment de gaz d'échappement, ou comme tronçon d'un composant d'une installation ou d'une machine de combustion (1), en voisinage direct avec le compartiment de combustion ou de gaz d'échappement, et l'élément de dissipation thermique est réalisé comme tronçon de la paroi (17) ou du composant, en voisinage non direct avec le compartiment de combustion ou de gaz d'échappement ; et
- dans un premier état de fonctionnement de l'installation ou de la machine de combustion (1) ou de l'installation industrielle, il existe une distance (15) entre l'élément de commutation (13) et l'élément de dissipation thermique (17 à 21), qui est fermée dans un second état de fonctionnement en raison de la dilatation thermique ou de la modification de l'état de phase de l'élément de commutation.

8. Dispositif à commande thermique selon la revendication 6, **caractérisé en ce que** :
- l'élément récepteur de chaleur est réalisé comme tronçon de la paroi intérieure d'un compartiment de traitement ou d'un compartiment annexe de traitement, ou comme tronçon d'un composant d'une installation industrielle en voisinage direct avec le compartiment de traitement ou le compartiment annexe de traitement ; et
- l'élément de dissipation thermique est réalisé comme tronçon de la paroi ou du composant, en voisinage non direct avec le compartiment de traitement ou le compartiment annexe de traitement.

9. Dispositif à commande thermique selon l'une des revendications précédentes, **caractérisé par** :
- un premier et un second organe de coopération de forces ou de formes (205 ; 207), lesquels sont réalisés de manière à être amenés depuis un état sans engagement jusque dans un état d'engagement, en dépendance de l'état de commande de la source de chaleur, via l'effet de la dilatation thermique ou de la modification de l'état de phase de l'élément de commutation ; et/ou
- un organe enveloppe qui est réalisé et agencé par rapport à l'élément de commutation de sorte que, en dépendance de l'état de commande de la source de chaleur, via l'effet de la dilatation thermique ou de la modification de l'état de phase de l'élément de commutation, la surface de la section transversale d'un canal ou d'une ouverture défini(e) par l'organe enveloppe et par l'élément de commutation, ou le volume d'une zone d'espace définie par l'organe enveloppe et par l'élément de commutation, se modifie ;
dans lequel le premier organe de coopération de forme ou l'organe enveloppe est formé de préférence par l'élément récepteur de chaleur.

10. Dispositif à commande thermique selon l'une des revendications 2 à 5, **caractérisé par** un premier et un second tronçon de circuit de commutation électrique, lesquels sont réalisés de manière à être amenés jusque dans l'état d'un circuit électrique fermé depuis un état interrompu électriquement, en dépendance de l'état de commande de la source de chaleur, via l'effet de la modification de l'état de phase de l'élément de commutation, dans lesquels on préfère que le premier tronçon de circuit de commutation inclut l'élément récepteur de chaleur et que celui-ci soit réalisé comme électriquement conducteur.

11. Dispositif à commande thermique selon l'une des revendications précédentes, **caractérisé en ce que** :
- divers matériaux sont agencés dans différents secteurs ; et/ou
- un état graduel est créé par l'utilisation des divers matériaux.
